# EUROPEAN PATENT SPECIFICATION

(11) **EP 3 131 169 B1**
(45) Date of publication and mention of the grant of the patent: **26.09.2018**
(21) Application number: 15776473.9
(22) Date of filing: 08.04.2015
(51) Int. Cl.: H02J 3/36

(54) **FREQUENCY CONTROL DEVICE FOR DC INTERCONNECTION SYSTEM AND DC INTERCONNECTION SYSTEM**
FREQUENZREGELUNGSVORRICHTUNG FÜR GLEICHSTROMVERBINDUNGSSYSTEM SOWIE GLEICHSTROMVERBINDUNGSSYSTEM
DISPOSITIF DE COMMANDE DE FRÉQUENCE POUR UN SYSTÈME D'INTERCONNEXION CC ET SYSTÈME D'INTERCONNEXION CC

(30) Priority: 09.04.2014 JP 2014080302
(43) Date of publication of application: 15.02.2017
(73) Proprietor: Kabushiki Kaisha Toshiba, Minato-ku Tokyo 105-8001 (JP)
(72) Inventor: KIMURA, Misao, Tokyo 105-8001 (JP); OTSUKI, Midori, Tokyo 105-8001 (JP); TAMURA, Yuuji, Tokyo 105-8001 (JP)
(74) Representative: Hoffmann Eitle
(86) International application number: PCT/JP2015/060938
(87) International publication number: WO 2015/156307

(56) References cited:
- EP-A1- 0 084 651
- WO-A1-2014/044561
- JP-A- H0 654 450
- JP-A- H06 178 450
- JP-A- H06 178 450
- JP-A- H09 233 704
- JP-A- H10 224 994
- JP-A- S49 116 543
- JP-A- S61 102 124
- JP-A- 2011 223 715
- JP-A- 2014 075 872

## Description

### Technical Field

The present invention relates to a frequency control apparatus for a direct current interconnection system, and to a direct current interconnection system.

### Background Art

JP 10-224994 teaches a frequency controller for a DC transmission system to control a system for linking AC systems through DC transmission well both for normal fluctuation and significant disturbance of load. Specifically, an emergency/normal switch receives frequency deviations F1 and F2 of systems A and B and makes a decision that an emergency state has occurred when the frequency fluctuation of any one of the AC systems A, B deviates from the range of normal fluctuation of load. Consequently, an emergency switch signal E is turned on to start operation of an integrator in a proportional integration control system. The emergency/normal switch also receives an output from the integrator and turns the emergency switch signal E off when respective frequency fluctuations are within the range of normal fluctuation of load and the output from the integrator is close to 0 thus stopping operation of the integrator.

JP 2011-223714 discloses a control apparatus for a DC interlock system to provide a control apparatus for a DC interlock system capable of compensating for a power variation amount of another AC system, while suppressing a power variation amount of one AC system interlocked by the DC interlock system. More particularly, a first power variation amount arithmetic operating section converts a frequency variation amount ΔF1 obtained from a first frequency f1 detected by a first frequency detector of a first AC system and a first reference frequency fr1 into a first power variation amount ΔP1. A second power variation amount arithmetic operating section converts a second frequency variation amount ΔF2 obtained from a second frequency f2 detected by a second frequency detector of a second AC system and a second reference frequency fr2 into a second power variation amount ΔP2. A power variation compensation control section compensates for a power variation, so as to offset the power variation amount in an increasing state from an AC system in an increasing state to an AC system in a decreasing state when any one of the first power variation amount ΔP1 and the second power variation amount ΔP2 is in the increasing state and the other is in the decreasing state.

JP 2011-223715 shows a control apparatus for a DC interlock system to provide a control apparatus for a DC interlock system capable of compensating a power variation amount of one of AC systems interlocked by a DC interlock system while suppressing the power variation amount of the other AC system. In particular, a first power variation amount arithmetic section converts a first frequency variation amount ΔF1 of a first frequency f1 detected by a first frequency detector 16 of a first AC system and a first reference frequency fr1 into a first power variation amount ΔP1. A second power variation amount arithmetic section converts a second frequency variation amount ΔF2 of a second frequency f2 detected by a second frequency detector of a second AC system and a second reference frequency fr2 into a second power variation amount ΔP2. A power variation amount averaging control section 19 compensates for a power variation, so as to average the first power variation amount ΔP1 and the second power variation amount ΔP2.

However, no consideration is given to the case where two power systems are interconnected by a plurality of direct current interconnection systems having a frequency control function, and the following problems occur.

Where the frequency deviation of the two power systems is minimized by power interchange, a change (correction value) of the required interchange power is determined in accordance with the frequency deviation. The change of the required interchange power has to be equal to the total sum of the interchange powers of the direct current interconnection systems.

However, where the direct current interconnection systems have different system frequency control functions and determine a change of interchange power based on the frequency deviation, the total value of the changes of interchange power exceeds the actually required change of interchange power, resulting in excessive control. In this case, frequency fluctuations may worsen.

If the changes of interchange power calculated by the direct current interconnection systems are adjusted to be small values in accordance with the number of direct current interconnection systems, the total value of the changes of interchange power may be small, if some of the direct current interconnection systems stop. As a result, the frequency control effect is affected, accordingly.

Under the circumstances, there is a demand for a frequency control apparatus for a direct current interconnection system and a direct current interconnection system, which are capable of effectively suppressing the frequency fluctuations of power systems when the power systems are interconnected by a plurality of direct current interconnection systems.

### [Prior Art Reference]

### [Patent Literature]

[Patent Literature 1]
   Jpn. Pat. Appln. KOKAI Publication No. 10-224994
[Patent Literature 2]
   Jpn. Pat. Appln. KOKAI Publication No. 2011-223714
[Patent Literature 3]
   Jpn. Pat. Appln. KOKAI Publication No. 2011-223715

### SUMMARY OF INVENTION

A frequency control apparatus according to an embodiment is a frequency control apparatus for a plurality of direct current interconnection systems which interconnect two power systems and control frequencies. The frequency control apparatus includes: a frequency deviation detector for detecting frequency deviations of the two power systems, a specific frequency deviation extractor for extracting a specific frequency deviation satisfying a predetermined condition from the frequency deviations detected by the frequency deviation detector; and a control switching unit for switching from frequency control which interchanges power between the two power systems in such a manner as to minimize the specific frequency deviation extracted by the specific frequency deviation extractor to frequency control which interchanges power between the two power systems in such a manner as to minimize the frequency deviation detected by the frequency deviation detector.

### BRIEF DESCRIPTION OF THE DRAWINGS

FIG. 1 illustrates a configuration example of direct current interconnection systems according to the first embodiment;
FIG. 2 illustrates a configuration example of the direct current interconnection main circuit and converter controller of the first embodiment;
FIG. 3 is a flowchart illustrating an example of a process by which the switching determination unit of the first embodiment performs mode switching;
FIG. 4 is a graph illustrating an example of how the absolute value of a frequency deviation varies when the switching determination unit of the first embodiment performs mode switching;
FIG. 5 is a graph illustrating an example of how the absolute value of a frequency deviation fluctuates when the switching determination unit of the first embodiment does not perform mode switching;
FIG. 6 illustrates a configuration example of direct current interconnection systems according to the second embodiment;
FIG. 7 illustrates a configuration example of direct current interconnection systems according to the third embodiment; and
FIG. 8 illustrates a configuration example of direct current interconnection systems according to the fourth embodiment.

Mode for Carrying Out the Invention Embodiments of the present invention will now be described with reference to the accompanying drawings.

### (First Embodiment)

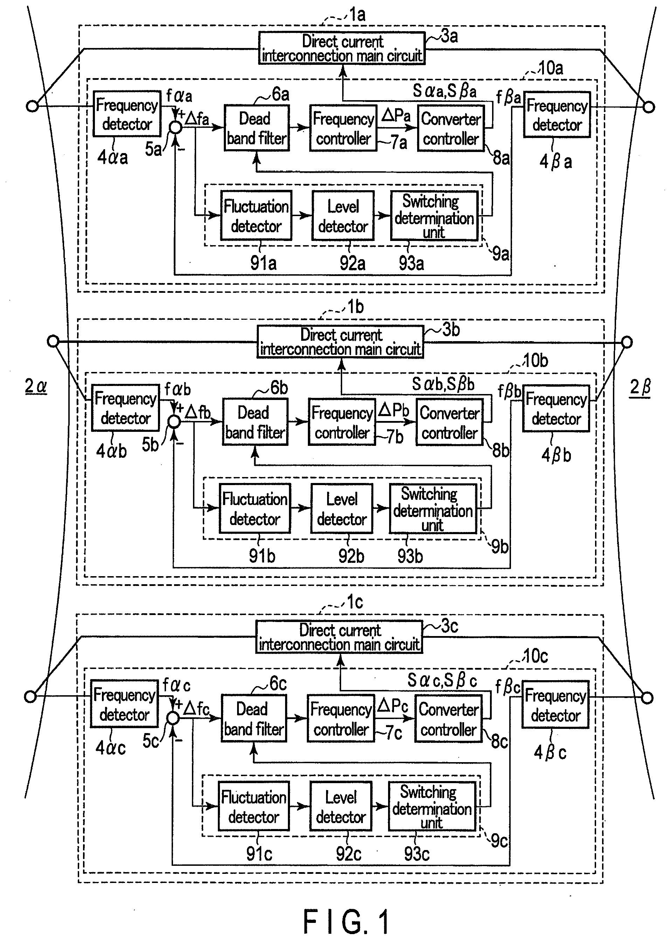

FIG. 1 illustrates a configuration example of direct current interconnection systems 1a, 1b and 1c according to the first embodiment. In the drawings, like reference numerals denote like parts, and a detailed description to such parts will be omitted. A description will be given mainly of different parts.

Two power systems 2α and 2β are interconnected by three direct current interconnection systems 1a, 1b and 1c.

Direct current interconnection system 1a comprises a direct current interconnection main circuit 3a and a frequency control apparatus 10a. The frequency control apparatus 10a includes two frequency detectors 4αa and 4βa, and further includes a subtractor (frequency deviation detector) 5a, a dead band filter (specific frequency deviation extractor) 6a, a frequency controller 7a, a converter controller 8a and a mode switching unit (control switching unit) 9a.

Direct current interconnection system 1b comprises a direct current interconnection main circuit 3b and a frequency control apparatus 10b. The frequency control apparatus 10b includes two frequency detectors 4αb and 4βb, and further includes a subtractor 5b, a dead band filter 6b, a frequency controller 7b, a converter controller 8b and a mode switching unit 9b.

Direct current interconnection system 1c comprises a direct current interconnection main circuit 3c and a frequency control apparatus 10c. The frequency control apparatus 10c includes two frequency detectors 4αc and 4βc, and further includes a subtractor 5c, a dead band filter 6c, a frequency controller 7c, a converter controller 8c and a mode switching unit 9c.

Since the three direct current interconnection systems la-lc are similar in configurations, direct current interconnection system 1a will be mainly described below. With respect to the other two direct current interconnection systems 1b and 1c, a description will be given mainly of how they are different from direct current interconnection system 1a.

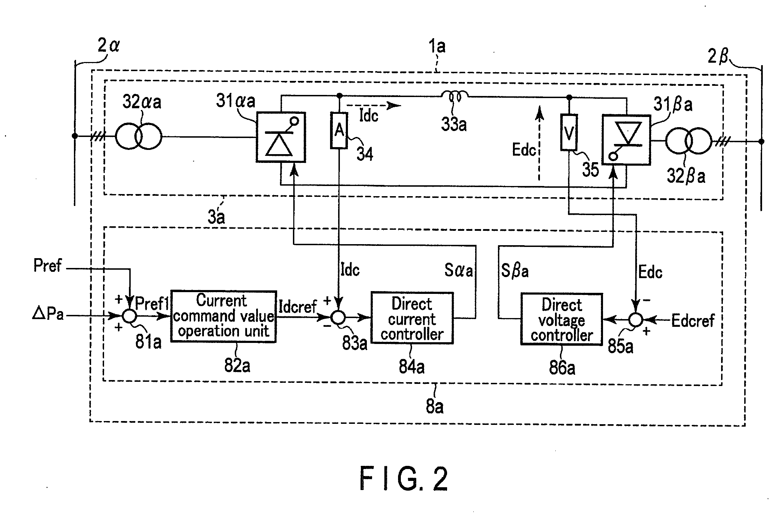

FIG. 2 illustrates a configuration example of the direct current interconnection main circuit 3a and converter controller 8a of the first embodiment.

The direct current interconnection main circuit 3a includes two converters 31αa and 31βa, two transformer 32αa and 32βa for converters, a direct current reactor 33a, a direct current detector 34, and a DC voltage detector 35.

The two converters 31αa and 31βa are a pair of converters, one (31αa) of which performs ac-to-dc voltage conversion and the other (31βa) performs dc-to-ac voltage conversion. The two converters 31αa and 31βa are connected to each other as a DC circuit, with the direct current reactor 33a interposed therebetween. Converter 31αa for dc-to-ac voltage conversion is connected to power system 2α by way of conversion transformer 32αa. Converter 31βa for dc-to-ac voltage conversion is connected to power system 2β by way of conversion transformer 32βa.

The direct current detector 34 and the DC voltage detector 35 are provided in the DC circuit. The direct current detector 34 detects direct current Idc flowing through the DC circuit and outputs a detection result to the converter controller 8a. The DC voltage detector 35 detects direct current Edc flowing through the DC circuit and outputs a detection result to the converter controller 8a.

The converter controller 8a comprises an adder 81a, a current command value operation unit 82a, subtractor 83a, a direct current controller 84a, subtractor 85a, and a DC voltage controller 86a.

The adder 81a receives interchange power command value Pref and also receives interchange power correction value ΔPa calculated by frequency controller 7a and handled by direct current interconnection system 1a. The interchange power command value Pref is provided by an upper-level system such as a feeding power direction center.

The adder 81a adds the interchange power correction value ΔPa to the interchange power command value Pref, and supplies interchange power command value Pref1 obtained thereby by this addition to the current command value operation unit 82a. The current command value operation unit 82a calculates a direct current command value Idcref so that the interchange power can satisfy the interchange power command value Pref1, and supplies the calculated direct current command value Idcref to subtractor 83a.

Subtractor 83a receives the direct current command value Idcref calculated by the current command value operation unit 82a and a direct current Idc detected by the direct current detector 34. Subtractor 83a subtracts the direct current command value Idcref from the direct current Idc, and supplies the resultant difference to the direct current controller 84a.

Based on the direct current difference output from the subtractor 83a, the direct current controller 84a supplies a control command Sαa to the converter 31αa of the direct current interconnection main circuit 3a. The control command Sαa is used for controlling the output of the converter 31αa so that the direct current Idc can become equal to the direct current command value Idcref. The converter 31αa performs ac-to-dc voltage conversion in accordance with the control command Sαa.

Subtractor 85a receives a rated voltage value Edcref of the DC circuit, and also receives a DC voltage Edc detected by the DC voltage detector 35. Subtractor 85a subtracts the DC voltage EDc from the rated voltage value Edcref, and supplies the resultant difference to the DC voltage controller 86a.

Based on the DC voltage difference received from subtractor 85a, the DC voltage controller 86a supplies a control command Sβa to the converter 31βa of the direct current interconnection main circuit 3a. The control command Sβa is used for controlling the output of the converter 31βa so that the DC voltage Edc can become equal to the rated voltage value Edcref. The converter 31βa performs dc-to-ac voltage conversion in accordance with the control command Sβa.

As described above, the converter controller 8a interchanges power between the two power systems 2α and 2β by controlling the two converters 31αa and 31βa of the direct current interconnection main circuit 3a. For example, when the frequency fαa of power system 2α increases, the sum of the interchange power command value Pref and the interchange power correction value ΔPa increases. Accordingly, the power provided from power system 2α to power system 2β increases. Since the surplus power of power system 2α decreases, the frequency increase is suppressed.

Frequency detector 4αa detects frequency fαa of the voltage of power system 2α. Frequency detector 4βa detects frequency fβa of the voltage of power system 2β. Frequency detector 4αa supplies the detected frequency fαa to subtractor 5a. Frequency detector 4βa supplies the detected frequency fβa to subtractor 5a.

Subtractor 5a calculates the difference (frequency deviation) between the two frequencies (Δfa=fαa-fβa). Subtractor 5a supplies the calculated frequency deviation Δfa to both the dead band filter 6a and the mode switching unit 9a.

The frequency deviation Δfa supplied from subtractor 5a is made to pass through the dead band filter 6a (the dead frequency band of which is predetermined), and the resultant frequency deviation Δfa is supplied to the frequency controller 7a. If the frequency deviation Δfa is within the predetermined dead band, the output of the dead band filter 6a is zero. If the frequency deviation Δfa is outside the predetermined dead band, the frequency deviation Δfa received from subtractor 5a is output from the dead band filter 6a as it is.

The frequency controller 7a calculates an interchange power correction value ΔPa in accordance with the frequency deviation Δfa supplied from the dead band filter 6a. The frequency controller 7a is made, for example, of a comparison circuit. The interchange power correction value ΔPa calculated by frequency controller 7a is a correction value handled by direct current interconnection system 1a. The frequency controller 7a supplies the calculated interchange power correction value ΔPa to the converter controller 8a. Based on this correction value, power is interchanged between the two converters 31αa and 31βa in such a manner that the frequency deviation Δfa is minimized (becomes closer to zero).

Based on the frequency deviation Δfa supplied from the subtractor 5a, the mode switching unit 9a switches the operation mode of the direct current interconnection system 1a between a main mode and a sub mode. The main mode is an operation mode which plays a central role in the frequency control when the three direct current interconnection systems 1a to 1c are operated. The sub mode is an operation mode which plays a peripheral role in the frequency control when the three direct current interconnection systems are operated.

Of the three direct current interconnection systems 1a to 1c, at least one of them is operated in the main mode. With respect to the direct current interconnection systems operated in the sub mode, the number of such systems may be any number or zero. If a direct current interconnection system operating in the main mode fails to operate properly for some reason or other, the mode switching unit 9a performs control so that another direct current interconnection system can take over the function of the main mode.

The mode switching unit 9a includes a fluctuation detector 91a, a level detector 92a and a switching determination unit 93a.

The fluctuation detector 91a receives a frequency deviation Δfa supplied from the subtractor 5a. The fluctuation detector 91a extracts a fluctuation component from the received frequency deviation Δfa. The fluctuation detector 91a is made, for example, of an incomplete differentiator. The fluctuation detector 91a supplies the extracted fluctuation component of the frequency deviation Δfa to the level detector 92a.

The level detector 92a receives the fluctuation component of the frequency deviation Δfa, which is extracted by the fluctuation detector 91a. If the absolute value of the fluctuation component of the frequency deviation Δfa is equal to or more than a predetermined threshold, the level detector 92a supplies "1" to the switching determination unit 93a. If that absolute value is less than the predetermined threshold, the level detector 92a supplies "0" to the switching determination unit 93a.

Two reference times Tsh and Tch are predetermined for the switching determination unit 93a. Reference time Tsh is a time used for determining whether or not the fluctuation in the frequency deviation Δfa is frequent. Reference time Tsh is, for example, one minute.

Reference time Tch is a time used for determining whether the fluctuation in the frequency deviation Δfa continues for a long time. Reference time Tch is, for example, 10 minutes or 20 minutes. Reference time Tch differs, depending upon the direct current interconnection systems 1a to 1c. Short reference time Tch is determined for a direct current interconnection system which is switched to the main mode in preference to others.

A value output from the level detector 92a is received by the switching determination unit 93a as value Ans. The switching determination unit 93a determines whether or not to perform mode switching, based on value Ans and the predetermined two reference times Tsh and Tch. The criterion for determining whether the mode should be switched from the sub mode to the main mode is based on the detection of whether or not the state in which "1" is frequently output from the level detector 92a due to the fluctuation in the frequency deviation Δfa continues for more than a certain time.

The switching determination unit 93a switches operation modes by changing the range of the dead band of the dead band filter 6a. When the operation mode is switched from the sub mode to the main mode, the switching determination unit 93a changes the dead band of the dead band filter 6a to ± 0Hz. Conversely, when the operation mode is switched from the main mode to the sub mode, the switching determination unit 93a changes the dead band of the dead band filter 6a to a range other than ± 0Hz (e.g., ± 2Hz).

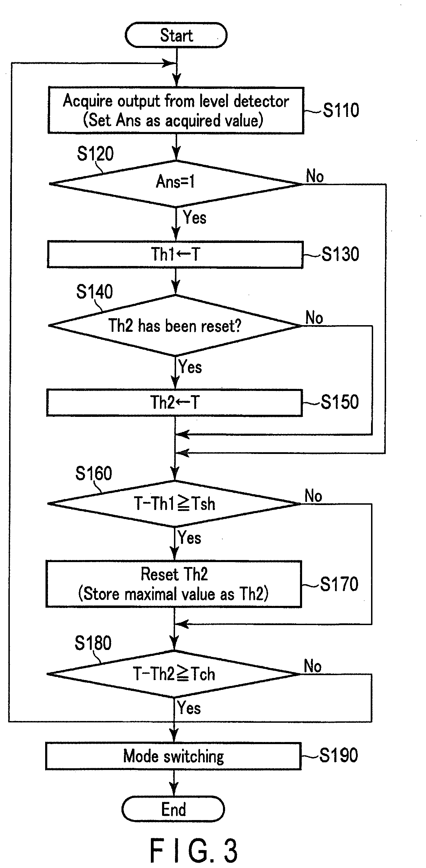

How the switching determination unit 93a determines the mode switching from the sub mode to the main mode will be described with reference to FIG. 3. FIG. 3 is a flowchart illustrating an example of a process by which the switching determination unit of the first embodiment performs mode switching.

The switching determination unit 93a determines that a value it receives from the level detector 92a is value Ans (Step S110). Where value Ans is "1" (Yes in Step 120), the switching determination unit 93a stores current time T as held time Th1 (step S130), and the flow advances to the determination processing of step S140. Where value Ans is "0" (No in Step S120), the switching determination unit 93a advances to the determination processing of step S160.

In the determination processing of step S140, the switching determination unit 93a determines whether held time Th2 has been reset or not. Where held time Th2 has been reset (Yes in Step 140), the switching determination unit 93a stores current time T as held time Th2 (step S150), and the flow advances to the determination processing of step S160. The initial state of held time Th2 is a reset state. Where held time Th2 has not been reset (No in Step 140), the switching determination unit 93a advances to the processing of step S160.

In the determination processing of step S160, the switching determination unit 93a determines whether or not the period from the time stored as held time Th1 to current time T is equal to or longer than reference period Tsh (e.g., one minute).

If the period from the time stored as held time Th1 to current time T is equal to or longer than reference period Tsh (Yes in step S160), the switching determination unit 93a resets the held time Th2 by storing a maximal value as time Th2 (step S170).

After resetting time Th2 (step S170), the switching determination unit 93a advances to the determination processing of step S180. If the period from the time stored as held time Th1 to current time T is shorter than reference period Tsh (No in step S160), the switching determination unit 93a advances to the determination processing of step S180.

In the determination processing of step S180, the switching determination unit 93a determines whether or not the period from the time stored as held time Th2 to current time T is equal to or longer than reference period Tch (e.g., ten minutes) (step S180). If held time Th2 is reset in step S170, the maximal value is stored as held time Th2, so that the determination never fails to be false (No).

If the period from the time stored as held time Th2 to current time T is equal to or longer than reference period Tch (Yes in step S180), the switching determination unit 93a executes mode switching from the sub mode to the main mode (step S190). On the other hand, if the period from the time stored as held time Th2 to current time T is shorter than reference period Tch (No in step S180), the switching determination unit 93a returns to the processing of step S110, and a series of operations mentioned above are repeated.

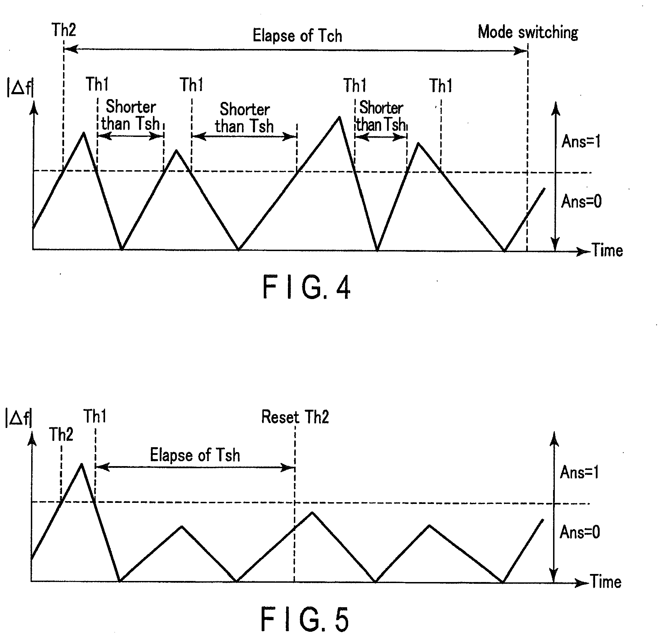

How the switching determination unit 93a performs the mode switching from the sub mode to the main mode will be described with reference to FIGS. 3, 4 and 5. FIG. 4 is a graph illustrating an example of how the absolute value |Δf| of a frequency deviation varies when the switching determination unit 93a of the first embodiment performs mode switching. FIG. 5 is a graph illustrating an example of how the absolute value |Δf| of a frequency deviation fluctuates when the switching determination unit 93a of the first embodiment does not perform mode switching. The absolute value |Δf| of the frequency deviation is a value corresponding to the absolute value of frequency deviation Δfa detected by the direct current interconnection system 1a.

If the absolute value |Δf| of the frequency deviation fluctuates greatly, as shown in FIG. 4, this absolute value frequently exceeds the threshold of the level detector 92a, so that held time Th1 is updated at short intervals. Accordingly, the formula shown in step S160 (namely, T-Th1≧Tsh) is not satisfied.

Therefore, held time Th2 is not reset, and the period from this held time Th2 to current time T increases. As a result, the formula shown in step S180 (namely, T-Th2≧Tch) is satisfied, and mode switching is carried out.

On the other hand, if the absolute value |Δf| of the frequency deviation does not greatly fluctuate, as shown in FIG. 5, this absolute value hardly exceeds the threshold of the level detector 92a, so that held time Th1 is updated at long intervals. Accordingly, the formula shown in step S160 (namely, T-Th1≧Tsh) is satisfied. As a result, held time th2 is reset. Since the formula shown in step S180 (namely, T-Th2≧Tch) is not satisfied, mode switching is not performed.

Specific operations of the three direct current interconnection systems 1a to 1c will be described with reference to FIG. 1.

It is assumed here that the three direct current interconnection systems 1a to 1c are set as follows: Direct current interconnection system 1a is operated in the main mode, and the remaining two direct current interconnection systems 1b and 1c are operated in the sub mode.

The dead band of direct current interconnection system 1a is set as ±0Hz. The dead band of direct current interconnection system 1b is set as ±2Hz, reference period Tsh thereof is set as one minute, and reference period Tch thereof is set as ten minutes. The dead band of direct current interconnection system 1c is set as ±2Hz, reference period Tsh thereof is set as one minute, and reference period Tch thereof is set as 20 minutes.

In direct current interconnection system 1a, the deviation Δfa between the frequency faa detected by frequency detector 4αa and the frequency fβa detected by frequency detector 4βa is output from the subtractor 5a and supplied to the dead band filter 6a. Since the dead band of direct current interconnection system 1a is set as ±0Hz, the frequency deviation Δfa supplied to the dead band filter 6a is supplied to the frequency controller 7a as it is.

The frequency controller 7a calculates an interchange power correction value ΔPa, which minimizes the frequency deviation Δfa supplied from the dead band filter 6a, and supplies that correction value to the converter controller 8a. The converter controller 8a supplies control signal Sαa to the direct current interconnection main circuit 3a in such a manner that the interchange power becomes equal to the total of the interchange power command value Pref and the interchange power correction value ΔPa.

Accordingly, if the interchange power varies by interchange power correction value ΔPa, both frequency fαa of power system 2α and frequency fβa of power system 2β change, and frequency deviation Δfa newly detected after that change passes through the dead band filter 6a and is supplied to the frequency controller 7a. In this manner, the interchange power correction value ΔPa is updated, and the interchange power is varied repeatedly. As a result, the frequency deviation Δfa converges to a minimal value.

In the meantime, in direct current interconnection system 1b, the deviation Δfb between the frequency fab detected by frequency detector 4αb and the frequency fβb detected by frequency detector 4βb is output from the subtractor 5b. In direct current interconnection system 1c, the deviation Δfc between the frequency fαc detected by frequency detector 4αc and the frequency fβc detected by frequency detector 4βc is output from the subtractor 5c.

The frequency deviation Δfb detected by the subtractor 5b of direct current interconnection system 1b and the frequency deviation Δfc detected by the subtractor 5c of direct current interconnection system 1c are different in terms of where they are detected. These frequency deviations, however, are frequency deviations of the power systems 2α and 2β of the same type. Therefore, the frequency deviation Δfb of direct current interconnection system 1b and the frequency deviation Δfc of direct current interconnection system 1c are approximately equal to the frequency deviation Δfa of direct current interconnection system 1a.

At normal times, the frequency deviations of the two power systems 2α and 2β are small (they are within the range of the dead band of ± 2Hz). For this reason, in direct current interconnection system 1b, the frequency deviation Δfb does not pass through the dead band filter 6b. Likewise, in direct current interconnection system 1c, the frequency deviation Δfc does not pass through the dead band filter 6c. As a result, the outputs of the dead band filters 6b and 6c are both zero.

Since the interchange power correction value ΔPb output from frequency controller 7b and the interchange power correction value ΔPc output from frequency controller 7c are both zero, the two direct current interconnection systems 1b and 1c operating in the sub mode do not perform frequency control in practice.

Let us assume that a disturbance occurs in the two power systems 2α and 2β and their frequencies fluctuate greatly, and that the frequency deviation Δfb of direct current interconnection system 1b exceeds the dead band of the dead band filter 6b and the frequency deviation Δfc of direct current interconnection system 1c exceeds the dead band of the dead band filter 6c.

In such a case, the frequency controller 7b of direct current interconnection system 1b outputs interchange power correction value ΔPb, which is for minimizing the frequency deviation Δfb, and performs frequency control to suppress the frequency fluctuations. Likewise, the frequency controller 7c of direct current interconnection system 1c outputs interchange power correction value ΔPc, which is for minimizing the frequency deviation Δfc, and performs frequency control to suppress the frequency fluctuations.

A description will now be given of the case where direct current interconnection system 1a stops.

If direct current interconnection system 1a stops, the frequency deviation Δfb detected in direct current interconnection system 1b and the frequency deviation Δfc detected in direct current interconnection system 1c increase.

If the frequency deviation Δfb of direct current interconnection system 1b increases and this state continues for more than 10 minutes, which is reference period Tch set for the switching determination unit 93b of direct current interconnection system 1b, then the operating mode of direct current interconnection system 1b switches from the sub mode to the main mode. In other words, the dead band of the dead band filter 6b of direct current interconnection system 1b changes to ±0Hz. Since the frequency deviation Δfb is supplied to the frequency controller 7b of direct current interconnection system 1b and frequency control is started, the frequency stops fluctuating.

When the frequency stops fluctuating, the frequency deviation Δfc of direct current interconnection system 1c becomes closer to zero. Therefore, even if direct current interconnection system 1a stops, the operating mode of direct current interconnection system 1b switches to the main mode, and the above-mentioned state does not continue for more than 20 minutes, which is reference period Tch set for the switching determination unit 93c of direct current interconnection system 1c. Therefore, the operating mode of direct current interconnection system 1c, which has lower priority than that of direct current interconnection system 1b, remains in the sub mode.

According to the present embodiment, two operating modes, namely the main mode and the sub mode, are available for each of the direct current interconnection systems 1a to 1c. Since each of the direct current interconnection systems 1a to 1c can be operated in respective modes, it is possible to determine which one of direct current interconnection systems 1a to 1c should be operated in the main mode for frequency control.

Direct current interconnection systems 1a to 1c are provided with respective dead band filters 6a to 6c to adjust the control amount in frequency control. Owing to this feature, even if the frequency control is performed by two or more direct current interconnection systems 1a to 1c, the control amount in frequency control is prevented from becoming excessive.

At normal times when the frequency fluctuations are small, the control amount of the frequency control performed by direct current connection systems 1a to 1c is kept from being excessive, and the frequency fluctuations do not worsen.

If a disturbance occurring in the power systems 2α and 2β results in great frequency fluctuations, two or more direct current interconnection systems perform the frequency control. Accordingly, reliable frequency control is enabled.

Furthermore, if direct current interconnection system 1a operating in the main mode stops for some reason or other, either of direct current interconnection systems 1b and 1c switches from the sub mode to the main mode according to the predetermined priority (which is determined by sensing the frequency fluctuations). Owing to this feature, the frequency control can be continued without pause.

### (Second Embodiment)

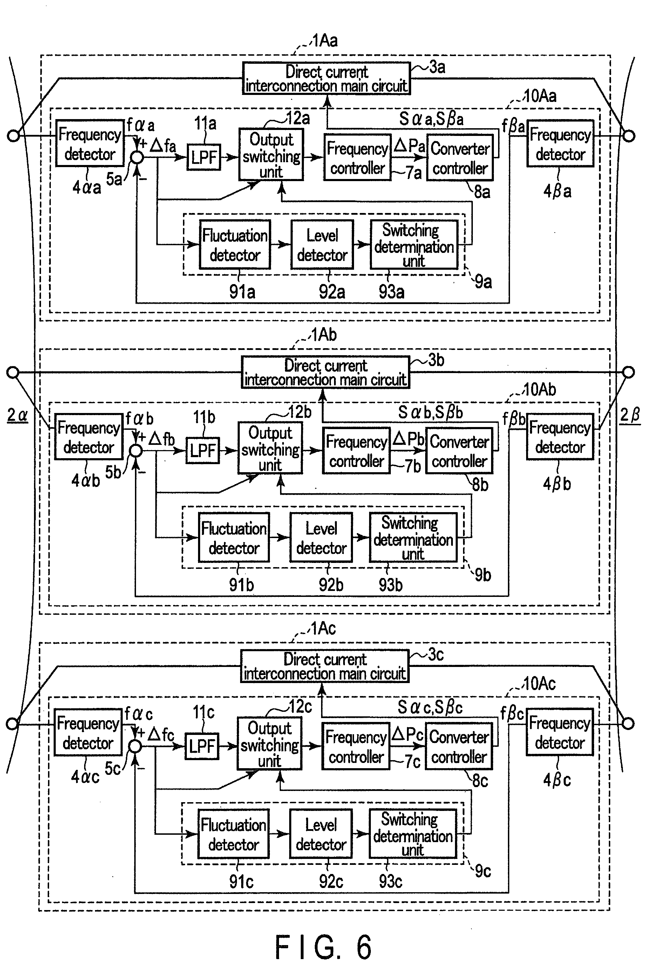

FIG. 6 illustrates a configuration example of direct current interconnection systems 1Aa, 1Ab and 1Ac according to the second embodiment.

Since the three direct current interconnection systems 1Aa-1Ac are similar in configurations, direct current interconnection system 1Aa will be mainly described below, as in the description of the first embodiment.

Direct current interconnection system 1Aa differs from direct current interconnection system 1a of the first embodiment shown in FIG. 1, in that frequency controller 10Aa is used in place of frequency controller 10a. Frequency controller 10Aa employs a low-pass filter (LPF) 11a and an output switching unit 12a, in place of the dead band filter 6a used in the frequency controller 10a of the first embodiment. Direct current interconnection system 1Aa of the second embodiment is similar to direct current interconnection system 1a of the first embodiment in the other points.

The low-pass filter 11a extracts long-period components (low-frequency components) from the frequency deviation Δfa output from the subtractor 5a. The extracted long-period components (i.e., long-period components of the frequency deviation Δfa) are supplied from the low-pass filter 11a to the output switching unit 12a.

The output switching unit 12a receives the frequency deviation Δfa output from the subtractor 5a and the long-period components extracted by the low-pass filter 11a. The output switching unit 12a selects either the frequency deviation Δfa received from the subtractor 5a or the long-period components received from the low-pass filter 11a, and supplies the selected one to the frequency controller 7a.

Where direct current interconnection system 1Aa is operated in the main mode, the output switching unit 12a supplies the frequency deviation Δfa supplied from the subtractor 5a to the frequency controller 7a. Where direct current interconnection system 1Aa is operated in the sub mode, the output switching unit 12a supplies the long-period components supplied from the low-pass filter 11a to the frequency controller 7a. The output switching unit 12 switches outputs in accordance with a result of the determination made by the switching determination unit 93a of the mode switching unit 9a.

As in the first embodiment, the frequency controller 7a calculates an interchange power correction value ΔPa in order to minimize the frequency deviation Δfa or the long-period components thereof. In accordance with the interchange power correction value ΔPa, the frequency controller 7a changes the interchange power and controls the frequency in such a manner as to suppress the frequency deviation Δfa.

Where direct current interconnection system 1Aa is operated in the main mode, the frequency controller 7a performs frequency control in such a manner that the frequency deviation Δfa of the two power systems 2α and 2β is minimized. Where direct current interconnection system 1Aa is operated in the sub mode, the frequency controller 7a performs frequency control in such a manner that only the long-period components of the frequency deviation Δfa of the two power systems 2α and 2β are minimized.

One of the three direct current interconnection systems 1Aa to 1Ac is operated in the main mode, and the remaining two direct current interconnection systems are operated in the sub mode. Where direct current interconnection system 1Aa is operated in the main mode, the frequency controller 7a performs frequency control in such a manner that the frequency deviation Δfa of the two power systems 2α and 2β is minimized. The direct current interconnection systems operated in the sub mode perform frequency control in such a manner that only the long-period components of the frequency deviation Δfa are minimized.

According to the present embodiment, the direct current interconnection systems 1Aa to 1Ac employ low-pass filters 11a to 11c and output switching units 12a to 12c, in place of the dead band filters 6a to 6c used in the first embodiment. With this configuration, the present embodiment provides advantages similar to those of the first embodiment.

Even where the frequency control is performed by two or more direct current interconnection systems 1Aa to 1Ac, the use of the low-pass filters 11a to 11c prevents the control amount in frequency control from becoming excessive and enables efficient frequency control even if a short-period and sharp frequency fluctuation occurs.

### (Third Embodiment)

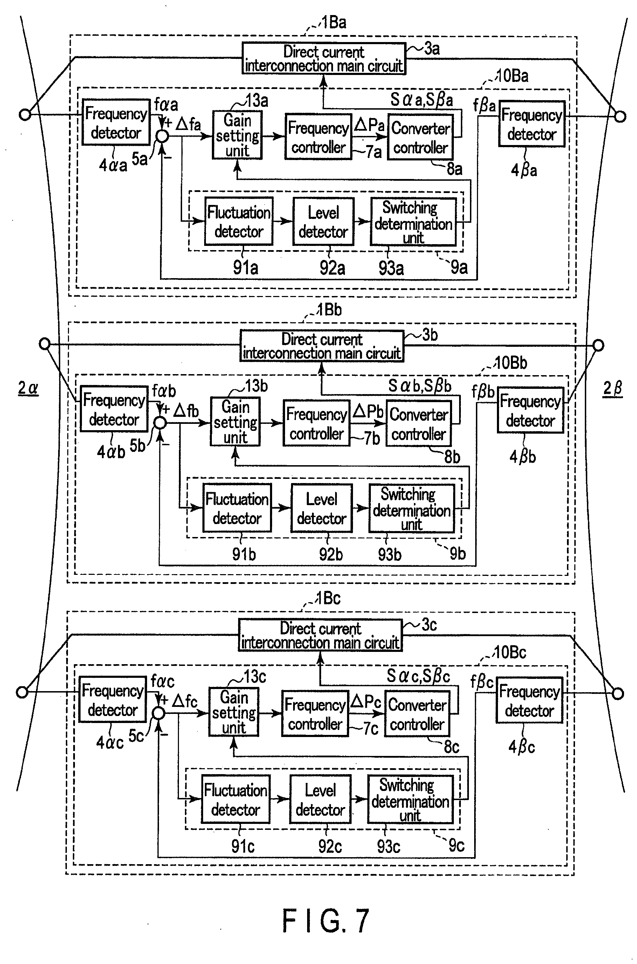

FIG. 7 illustrates a configuration example of direct current interconnection systems 1Ba, 1Bb and 1Bc according to the third embodiment.

Since the three direct current interconnection systems 1Ba-1Bc are similar in configurations, direct current interconnection system 1Ba will be mainly described below, as in the description of the first embodiment.

Direct current interconnection system 1Ba differs from direct current interconnection system 1a of the first embodiment shown in FIG. 1, in that frequency controller 10Ba is used in place of frequency controller 10a. Frequency controller 10Ba employs a gain setting unit 13a, in place of the dead band filter 6a used in the frequency controller 10a of the first embodiment. Direct current interconnection system 1Ba of the third embodiment is similar to direct current interconnection system 1a of the first embodiment in the other points.

The gain setting unit 13a multiplies the frequency deviation Δfa supplied from subtractor 5a by a predetermined gain, and the frequency deviation Δfa obtained thereby is supplied to the frequency controller 7a. The gain setting unit 13a changes the gain in accordance with a result of the determination made by the switching determination unit 93a of the mode switching unit 9a.

Where direct current interconnection system 1Ba is operated in the main mode, the gain is set as "1." In this case, the frequency deviation Δfa supplied from the subtractor 5a is supplied to the frequency controller 7a as it is. Where direct current interconnection system 1Ba is operated in the sub mode, the gain is set as "0." In this case, "0" is supplied to the frequency controller 7a as the frequency deviation Δfa.

As can be seen from this, where direct current interconnection system 1Ba is operated in the sub mode, frequency control is not performed in practice. The gain used when the operating mode is the sub mode does not have to be "0" unless it is "1." For example, when the operating mode is the sub mode, the gain may be set as 0.2, and auxiliary frequency control may be performed.

According to the present embodiment, the direct current interconnection systems 1Ba to 1Bc employ gain setting units 13a to 13c, in place of the dead band filters 6a to 6c used in the first embodiment. With this configuration, the present embodiment provides advantages similar to those of the first embodiment.

The gains of the gain setting units 13a to 13c are set as "0" when the operating mode is the sub mode. By setting the gains in this manner, one of direct current interconnection systems 1Ba to 1Bc that is operated in the main mode performs frequency control, and the remaining direct current interconnection systems operated in the sub mode do not perform frequency control.

Where the operating mode is the sub mode, the gains of the gain setting units 13a to 13c are set as a value greater than "0" and less than 1. By setting the gains in this manner, the direct current interconnection systems operated in the sub mode perform auxiliary frequency control such that the control amount in frequency control does not become excessive.

### (Fourth Embodiment)

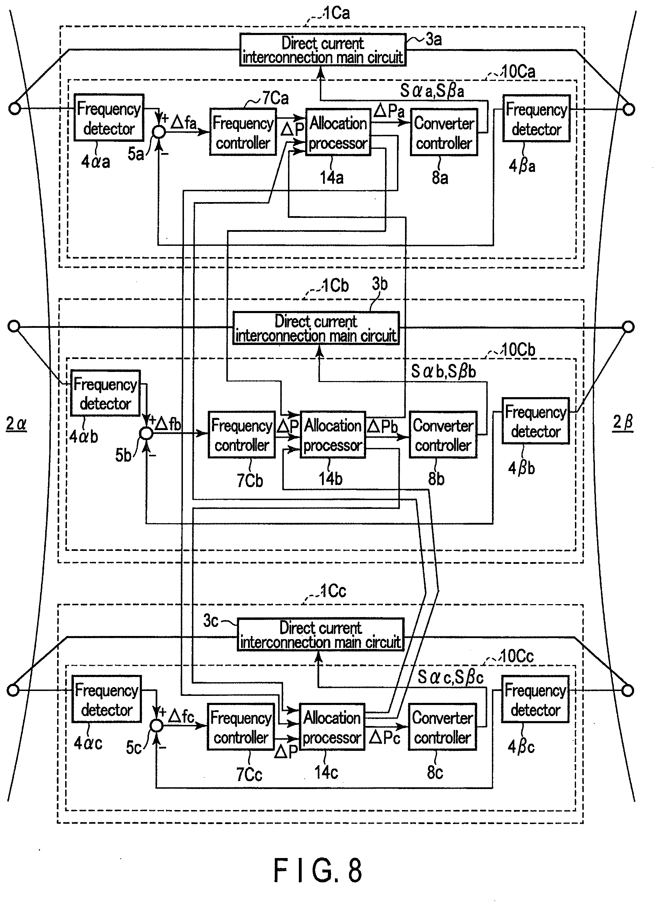

FIG. 8 illustrates a configuration example of direct current interconnection systems 1Ca, 1Cb and 1Cc according to the fourth embodiment.

Since direct current interconnection systems 1Ca-1Cc are similar in configurations, direct current interconnection system 1Ca will be mainly described below, as in the description of the first embodiment.

Direct current interconnection system 1Ca differs from direct current interconnection system 1a of the first embodiment shown in FIG. 1, in that frequency controller 10Ca is used in place of frequency controller 10a. Frequency controller 10Ca employs an allocation processor (interchange power allocator) 14a in place of the dead band filter 6a and mode switching unit 9a used in the frequency controller 10a of the first embodiment, and also employs frequency controller 7Ca in place of frequency controller 7a. Direct current interconnection system 1Ca of the fourth embodiment is similar to direct current interconnection system 1a of the first embodiment in the other points.

The frequency deviation Δfa calculated by the subtractor 5a is supplied to the frequency controller 7Ca as it is. As in the first embodiment, the frequency controller 7Ca calculates an interchange power correction value ΔP on the basis of the frequency deviation Δfa.

The calculated interchange power correction value ΔP is an overall correction value and enables each of the direct current interconnection systems 1Ca to 1Cc to perform frequency control. The frequency controller 7Ca supplies the calculated interchange power correction value ΔP to the allocation processor 14a. In the other points, the frequency controller 7Ca is similar to frequency controller 7a of the first embodiment.

The allocation processors 14a to 14c of the three direct current interconnection systems 1Ca to 1Cc are connected to one another on an information transmission path. Distribution processor 14a calculates an interchange power correction value ΔPa handled by direct current interconnection system 1Ca, based on either the interchange power correction value ΔP calculated by frequency controller 7Ca or the interchange power correction values entered from the allocation processors 14b and 14c of the other direct current interconnection systems 1Cb and 1Cc. When direct current interconnection system 1Ca is operated in the main mode, allocation processor 14a provides direct current interconnection systems 1Cb and 1Cc operating in the sub mode with their corresponding interchange power correction values.

Operations of the direct current interconnection systems 1Ca to 1Cc will be described.

It is assumed that direct current interconnection system 1Ca has the highest priority, direct current interconnection system 1Cb has an intermediate priority, and direct current interconnection system 1Cc has the lowest priority. The control amount in frequency control of a higher-priority direct current interconnection system is larger than that of a lower-priority direct current interconnection system. Based on this priority, the initial settings of the direct current interconnection systems 1Ca to 1Cc are determined as follows:
The operating mode of direct current interconnection system 1Ca is the main mode. Direct current interconnection system 1Ca performs frequency control with the help of the two lower-priority direct current interconnection systems 1Cb and 1Cc.

The operating mode of direct current interconnection system 1Cb is the sub mode. Direct current interconnection system 1Cb performs frequency control in response to a command supplied from higher-priority direct current interconnection system 1Ca.

The operating mode of direct current interconnection system 1Cc is the sub mode. Direct current interconnection system 1Cc performs frequency control in response to a command supplied from one of higher-priority direct current interconnection systems 1Ca and 1Cb.

A method for allocating an interchange power correction value ΔP to direct current interconnection systems 1Ca to 1Cc will be described.

Allocation processor 14a of direct current interconnection system 1Ca operating in the main mode calculates an interchange power correction value ΔPa handled by direct current interconnection system 1Ca, based on the overall interchange power correction value ΔP calculated by frequency controller 7Ca.

If the overall interchange power correction value ΔP is smaller than a predetermined first power value (e.g., the rated power of direct current interconnection main circuit 3a), allocation processor 14a calculates the overall interchange power correction value ΔP as interchange power correction value ΔPa handled by direct current interconnection system 1Ca.

If the overall interchange power correction value ΔP is equal to or larger than the first power value, allocation processor 14a calculates an interchange power correction value corresponding to a first power value of the overall interchange power correction value ΔP, as interchange power correction value ΔPa handled by direct current interconnection system 1Ca. Allocation processor 14a allocates the remaining interchange power correction value to direct current interconnection systems 1Cb and 1Cc as an interchange power correction value to be handled by them. The interchange power correction value ΔPa handled by direct current interconnection system 1Ca is supplied to the converter controller 8a.

If the remaining interchange power correction value is not zero, allocation processor 14a determines that it should be handled by direct current interconnection system 1Cb having the next high priority, and supplies it to direct current interconnection system 1Cb as interchange power correction value ΔPb, provided that it does not exceed a predetermined second power value (e.g., the rated power of direct current interconnection main circuit 3b of direct current interconnection system 1Cb).

If the remaining interchange power correction value is not zero after interchange power correction value ΔPb is supplied to direct current interconnection system 1Cb, allocation processor 14a determines that the remaining interchange power correction value should be handled by direct current interconnection system 1Cc having the next high priority, and supplies it to direct current interconnection system 1Cc as interchange power correction value ΔPc, provided that it does not exceed a predetermined third power value (e.g., the rated power of direct current interconnection main circuit 3c of direct current interconnection system 1Cc).

Distribution processor 14a supplies the calculated interchange power correction values ΔPb and ΔPc to allocation processors 14b and 14c corresponding to them. Distribution processor 14b supplies interchange power correction value ΔPb (which should be handled by direct current interconnection system 1Cb) to converter controller 8b. Distribution processor 14c supplies interchange power correction value ΔPc (which should be handled by direct current interconnection system 1Cc) to converter controller 8c.

Interchange power correction value ΔP may be allocated to direct current interconnection systems 1Ca to 1Cc in a method different from that described above. For example, interchange power correction value ΔP may be divided equally and these divisions may be allocated to direct current interconnection systems 1Ca to 1Cc. Alternatively, interchange power correction value ΔP may be allocated in proportions determined by the rated power of direct current interconnection main circuits 3a to 3c.

Next, a description will be given as to how direct current interconnection systems are switched from the sub mode to the main mode if the direct current interconnection system 1Ca operating in the main mode stops for some reason.

If the direct current interconnection system 1Ca operating in the main mode stops, the allocation processor 14b of direct current interconnection system 1Cb operating in the sub mode fails to receive interchange power correction value ΔPb to be handled by direct current interconnection system 1Cb. Likewise, the allocation processor 14c of direct current interconnection system 1Cc operating in the sub mode fails to receive interchange power correction value ΔPc to be handled by direct current interconnection system 1Cc.

Non-signal duration times are predetermined for the allocation processors 14b and 14c. The non-signal duration time is determined such that the higher the priority of a direct current interconnection system is, the shorter will be the corresponding non-signal duration time. By way of example, it is assumed that the non-signal duration time of allocation processor 14b is set as 10 minutes and the non-signal duration time of allocation processor 14c is set as 20 minutes.

When 10 minutes (non-signal duration time) elapse from the time when allocation processor 14b stops receiving interchange power correction value ΔPb (which is to be handled by direct current interconnection system 1Cb) from allocation processor 14a, allocation processor 14b switches the operating mode of direct current interconnection system 1Cb from the sub mode to the main mode.

Like allocation processor 14a described above, allocation processor 14b calculates interchange power correction value ΔPb to be handled by direct current interconnection system 1Cb and interchange power correction value ΔPc to be handled by direct current interconnection system 1Cc, on the basis of the overall interchange power correction value ΔP calculated by frequency controller 7Cb. Distribution processor 14b supplies the calculated interchange power correction value ΔPc to allocation processor 14c.

After 10 minutes (non-signal duration time) elapse from the time when allocation processor 14c stops receiving interchange power correction value ΔPc (which is to be handled by direct current interconnection system 1Cc) from allocation processor 14a and before 20 minutes (non-signal duration time) elapse, allocation processor 14c receives interchange power correction value ΔPc to be handled by direct current interconnection system 1Cc from allocation processor 14b. Therefore, even if direct current interconnection system 1Ca stops, allocation processor 14c does not switch the operating mode of direct current interconnection system 1Cc from the sub mode to the main mode.

If direct current interconnection system 1Cb stops after direct current interconnection system 1Ca stops, 20 minutes (non-signal duration time of allocation processor 14c) elapse from the time when allocation processor 14c stops receiving interchange power correction value ΔPc (which is to be handled by direct current interconnection system 1Cc), allocation processor 14c switches the operating mode of direct current interconnection system 1Cc from the sub mode to the main mode.

In the above, allocation processors 14b and 14c switch operating modes by detecting that the reception of interchange power correction values ΔPb and ΔPc to be handled by direct current interconnection systems 1Cb and 1Cc are not received. The operating modes may be switched in other methods. For example, allocation processors 14a to 14c may switch operating modes by mutually communicating with each other at all times and detecting that direct current interconnection systems 1Ca to 1Cc stop operations (or stop communications).

As described above, even if the direct current interconnection system 1Ca operating in the main mode stops, only the direct current interconnection system 1Cb having the next high priority switches from the sub mode to the main mode, and power systems 2α and 2β continue to perform frequency control.

According to the present embodiment, all direct current interconnection systems 1Ca to 1Cc are provided with their respective allocation processors 14a to 14c, and a direct current interconnection system operating in the main mode can calculate interchange power correction values ΔPa to ΔPc to be allocated to all direct current interconnection systems 1Ca to 1Cc. The present embodiment can provide advantages similar to those of the first embodiment.

The above embodiments were described, referring to the case where the number of direct current interconnection systems is three. However, the number of direct current interconnection systems may be any number as long as it is two or more.

In each of the embodiments, when a direct current interconnection system is operated in the sub mode, a particular frequency deviation (hereinafter a specific frequency deviation) that satisfies predetermined conditions is extracted from the frequency deviations of the two power systems, by using a dead band filter, a unit filter or a gain setting unit, and frequency control is performed in such a manner as to minimize that specific frequency deviation.

However, the extraction method of the specific frequency deviation is not limited to this. For example, provided that frequency control is intended to assist the frequency control performed by the direct current interconnection system operating in the main mode, a specific frequency deviation may be extracted from the frequency deviations of the two power systems under any condition (components or range).

While a certain embodiment has been described, this embodiment has been presented by way of example only, and is not intended to limit the scope of the inventions. Indeed, the novel embodiment described herein may be embodied in a variety of other forms which are defined in the accompanying claims and which are intended to cover such forms or modifications as would fall within the scope of the inventions.

### Reference Signs List

1a, 1b, 1c... Direct Current Interconnection System, 2α, 2β... Power System, 3a, 3b, 3c... Direct Current Interconnection Main Circuit, 4αa, 4βa, 4αb, 4βb, 4αc, 4βc... Frequency Detector, 5a, 5b, 5c... Subtractor, 6a, 6b, 6c... Dead Band Filter, 7a, 7b, 7c... Frequency Controller, 8a, 8b, 8c... Converter Controller, 9a, 9b, 9c... Mode Switching Unit, 10a, 10b, 10c... Frequency Controller, 91a, 91b, 91c... Fluctuation Detector, 92a, 92b, 92c... Level Detector, 93a, 93b, 93c... Switching Determination Unit

## Claims

1. A frequency control apparatus used for a plurality of direct current interconnection systems (1a, 1b, 1c) which interconnect two power systems (2α, 2β) and control frequencies, **characterized by** comprising:
a frequency deviation detector (5a) which detects frequency deviations of the two power systems (2α, 2β);
a specific frequency deviation extractor (6a) which extracts a specific frequency deviation satisfying a predetermined condition from the frequency deviations detected by the frequency deviation detector (5a);
a control switching unit (9a) for switching from frequency control which interchanges power between the two power systems (2α, 2β) said unit being adapted as to minimize the specific frequency deviation extracted by the specific frequency deviation extractor (6a) to frequency control which interchanges power between the two power systems (2α, 2β) said unit being adapted as to minimize the frequency deviation detected by the frequency deviation detector (5a).

2. The frequency control apparatus according to claim 1, **characterized in that** the specific frequency deviation extractor (6a) sets "0" as the specific frequency deviation if the frequency deviation is within a predetermined dead band range.

3. The frequency control apparatus according to claim 1, **characterized in that** the specific frequency deviation extractor (6a) comprises a long-period component extractor (11a) which extracts a long-period component from the frequency deviation detected by the frequency deviation detector (5a).

4. The frequency control apparatus according to claim 1, **characterized in that** the specific frequency deviation extractor (6a) calculates the specific frequency deviation by multiplying a frequency deviation by a gain.

5. The frequency control apparatus according to any one of claims 1 to 4, **characterized in that** the control switching unit (9a) switches, based on the frequency deviation detected by the frequency deviation detector (5a), from frequency control which interchanges power between the two power systems (2α, 2β) said unit being adapted as to minimize the specific frequency deviation extracted by the specific frequency deviation extractor (6a) to frequency control which interchanges power between the two power systems (2α, 2β) said unit being adapted as to minimize the frequency deviation detected by the frequency deviation detector (5a).

6. A frequency control apparatus used for a plurality of direct current interconnection systems (1a, 1b, 1c) which interconnect two power systems (2α, 2β) and control frequencies, **characterized by** comprising:
a frequency deviation detector (5a) which detects a frequency deviation of the two power systems (2α, 2β);
an interchange power allocation unit (14a) which calculates an interchange power value for power interchange between the two power systems (2α, 2β) said unit being adapted as to minimize the frequency deviation detected by the frequency deviation detector (5a), and which divides the interchange power value into values to be handled by the direct current interconnection systems (1a, 1b, 1c) and allocates the values to the direct current interconnection systems (1a, 1b, 1c);
a control switching unit (9a) for switching from frequency control which interchanges power by using an interchange power value received from another direct current interconnection system as a value to be handled by a corresponding direct current interconnection system to frequency control which interchanges power by using an interchange power value allocated by the interchange power allocation unit (14a) as a value to be handled by the corresponding direct current interconnection system.

7. The frequency control apparatus according to claim 6, **characterized in that** the interchange power allocation unit (14a) allocates that portion of the interchange power which is an excess over a predetermined value as an interchange power value to be handled by said another direct current interconnection system, and allocates that portion of the interchange power which is up to the predetermined value as an interchange power value to be handled by the corresponding direct current interconnection system.

8. The frequency control apparatus according to claim 6, **characterized in that** the interchange power allocation unit (14a) calculates interchange power values to be handled by the direct current interconnection systems (1a, 1b, 1c) based on predetermined proportions.

9. A direct current interconnection system which interconnects two power systems (2α, 2β) connected by a DC circuit and control frequencies, **characterized by** comprising:
a frequency deviation detector (5a) which detects frequency deviations of the two power systems (2α, 2β);
a specific frequency deviation extractor (6a) which extracts a specific frequency deviation satisfying a predetermined condition from the frequency deviations (6a) detected by the frequency deviation detector (5a); and
a control switching unit (9a) for switching from frequency control which interchanges power between the two power systems (2α, 2β) said unit being adapted as to minimize the specific frequency deviation extracted by the specific frequency deviation extractor (6a) to frequency control which interchanges power between the two power systems (2α, 2β) said unit being adapted as to minimize the frequency deviation detected by the frequency deviation detector (5a).

## Patentansprüche

1. Frequenzsteuervorrichtung, die für eine Vielzahl von Gleichstromzusammenschaltungssystemen (1a, 1b, 1c), die zwei Stromsysteme (2α, 2β) zusammenschalten und Frequenzen steuern, verwendet wird, **dadurch gekennzeichnet, dass** sie umfasst:
einen Frequenzabweichungsdetektor (5a), der Frequenzabweichungen der zwei Stromsysteme (2α, 2β) detektiert;
einen Spezifische-Frequenzabweichung-Extraktor (6a), der eine spezifische Frequenzabweichung, die eine vorbestimmte Bedingung implementiert, aus den durch den Frequenzabweichungsdetektor (5a) detektierten Frequenzabweichungen extrahiert;
eine Steuerschalteinheit (9a) zum Schalten von einer Frequenzsteuerung, die Strom zwischen den zwei Stromsystemen (2α, 2β) austauscht, wobei die Einheit dazu eingerichtet ist, die durch den Spezifische-Frequenzabweichung-Extraktor (6a) extrahierte spezifische Frequenzabweichung zu minimieren, auf eine Frequenzsteuerung, die Strom zwischen den zwei Stromsystemen (2α, 2β) austauscht, wobei die Einheit dazu eingerichtet ist, die durch den Frequenzabweichungsdetektor (5a) detektierte Frequenzabweichung zu minimieren.

2. Frequenzsteuervorrichtung nach Anspruch 1, **dadurch gekennzeichnet, dass** der Spezifische-Frequenzabweichung-Extraktor (6a) "0" als die spezifische Frequenzabweichung festlegt, wenn die Frequenzabweichung innerhalb eines vorbestimmten Todbandbereichs liegt.

3. Frequenzsteuervorrichtung nach Anspruch 1, **dadurch gekennzeichnet, dass** der Spezifische-Frequenzabweichung-Extraktor (6a) einen Langfristkomponentenextraktor (11a) umfasst, der eine Langfristkomponente aus der durch den Frequenzabweichungsdetektor (5a) detektierten Frequenzabweichung extrahiert.

4. Frequenzsteuervorrichtung nach Anspruch 1, **dadurch gekennzeichnet, dass** der Spezifische-Frequenzabweichung-Extraktor (6a) die spezifische Frequenzabweichung durch Multiplizieren einer Frequenzabweichung mit einer Eingangsverstärkung berechnet.

5. Frequenzsteuervorrichtung nach einem der Ansprüche 1 bis 4, **dadurch gekennzeichnet, dass** die Steuerschalteinheit (9a) basierend auf der durch den Frequenzabweichungsdetektor (5a) detektierten Frequenzabweichung von der Frequenzsteuerung, die Strom zwischen den zwei Stromsystemen (2α, 2β) austauscht, wobei die Einheit dazu eingerichtet ist, die durch den Spezifische-Frequenzabweichung-Extraktor (6a) extrahierte spezifische Frequenzabweichung zu minimieren, auf die Frequenzsteuerung schaltet, die Strom zwischen den zwei Stromsystemen (2α, 2β) austauscht, wobei die Einheit dazu eingerichtet ist, die durch den Frequenzabweichungsdetektor (5a) detektierte Frequenzabweichung zu minimieren.

6. Frequenzsteuervorrichtung, die für eine Vielzahl von Gleichstromzusammenschaltungssystemen (1a, 1b, 1c), die zwei Stromsysteme (2α, 2β) zusammenschalten und Frequenzen steuern, verwendet wird, **dadurch gekennzeichnet, dass** sie umfasst:
einen Frequenzabweichungsdetektor (5a), der eine Frequenzabweichung der zwei Stromsysteme (2α, 2β) detektiert;
eine Austauschstromzuweisungseinheit (14a), die einen Austauschstromwert zum Stromaustausch zwischen den zwei Stromsystemen (2α, 2β) berechnet, wobei die Einheit dazu eingerichtet ist, die durch den Frequenzabweichungsdetektor (5a) detektierte Frequenzabweichung zu minimieren, und die den Austauschstromwert in durch die Gleichstromzusammenschaltungssysteme (1a, 1b, 1c) handzuhabende Werte teilt und die Werte den Gleichstromzusammenschaltungssystemen (1a, 1b, 1c) zuweist;
eine Steuerschalteinheit (9a) zum Schalten von einer Frequenzsteuerung, die unter Verwendung eines Austauschstromwerts, der von einem anderen Gleichstromzusammenschaltungssystem als ein Wert, der durch ein entsprechendes Gleichstromzusammenschaltungssystem handzuhaben ist, empfangen wird, Strom austauscht, auf eine Frequenzsteuerung, die durch Verwendung eines Austauschstromwerts, der durch die Austauschstromzuweisungseinheit (14a) als ein durch das entsprechende Gleichstromzusammenschaltungssystem handzuhabender Wert zugewiesen wird, Strom tauscht.

7. Frequenzsteuervorrichtung nach Anspruch 6, **dadurch gekennzeichnet, dass** die Austauschstromzuweisungseinheit (14a) den Anteil des Austauschstroms, der einen Überschuss über einen vorbestimmten Wert darstellt, als einen durch das andere Gleichstromzusammenschaltungssystem handzuhabenden Austauschstromwert zuweist, und den Anteil des Austauschstroms, der bis zu dem vorbestimmten Wert reicht, als einen durch das entsprechende Gleichstromzusammenschaltungssystem handzuhabenden Austauschstromwert zuweist.

8. Frequenzsteuervorrichtung nach Anspruch 6, **dadurch gekennzeichnet, dass** die Austauschstromzuweisungseinheit (14a) durch die Gleichstromzusammenschaltungssysteme (1a, 1b, 1c) handzuhabende Austauschstromwerte basierend auf vorbestimmten Anteilen berechnet.

9. Gleichstromzusammenschaltungssystem, das zwei Stromsysteme (2α, 2β), die durch eine Gleichstromschaltung verbunden sind und Frequenzen steuern, zusammenschaltet, **dadurch gekennzeichnet, dass** es umfasst:
einen Frequenzabweichungsdetektor (5a), der Frequenzabweichungen der zwei Stromsysteme (2α, 2β) detektiert;
einen Spezifische-Frequenzabweichung-Extraktor (6a), der eine spezifische Frequenzabweichung, die eine vorbestimmte Bedingung implementiert, aus den durch den Frequenzabweichungsdetektor (5a) detektierten Frequenzabweichungen (6a) extrahiert; und
eine Steuerschalteinheit (9a) zum Schalten von einer Frequenzsteuerung, die Strom zwischen den zwei Stromsystemen (2α, 2β) austauscht, wobei die Einheit dazu eingerichtet ist, die durch den Spezifische-Frequenzabweichung-Extraktor (6a) extrahierte spezifische Frequenzabweichung zu minimieren, auf eine Frequenzsteuerung, die Strom zwischen den zwei Stromsystemen (2α, 2β) austauscht, wobei die Einheit dazu eingerichtet ist, die durch den Frequenzabweichungsdetektor (5a) detektierte Frequenzabweichung zu minimieren.

## Revendications

1. Appareil de commande de fréquence utilisé pour une pluralité de systèmes d'interconnexion CC (1a, 1b, 1c) qui interconnectent deux systèmes électriques (2α, 2β) et commandent des fréquences, **caractérisé en ce qu'**il comprend :
un détecteur d'écart de fréquence (5a) qui détecte des écarts de fréquence des deux systèmes électriques (2α, 2β) ;
un extracteur d'écart de fréquence spécifique (6a) qui extrait un écart de fréquence spécifique satisfaisant une condition prédéterminée des écarts de fréquence détectés par le détecteur d'écart de fréquence (5a) ;
une unité de commutation de commande (9a) pour une commutation depuis une commande de fréquence qui échange la puissance électrique entre les deux systèmes électriques (2α, 2β), ladite unité étant adaptée pour réduire au minimum l'écart de fréquence spécifique extrait par l'extracteur d'écart de fréquence spécifique (6a) à une commande de fréquence qui échange la puissance électrique entre les deux systèmes électriques (2α, 2β), ladite unité étant adaptée pour réduire au minimum l'écart de fréquence détecté par le détecteur d'écart de fréquence (5a).

2. Appareil de commande de fréquence selon la revendication 1, **caractérisé en ce que** l'extracteur d'écart de fréquence spécifique (6a) définit « 0 » comme l'écart de fréquence spécifique si l'écart de fréquence est à l'intérieur d'une plage de bande morte prédéterminée.

3. Appareil de commande de fréquence selon la revendication 1, **caractérisé en ce que** l'extracteur d'écart de fréquence spécifique (6a) comprend un extracteur de composante de longue période (11a) qui extrait une composante de longue période de l'écart de fréquence détecté par le détecteur d'écart de fréquence (5a).

4. Appareil de commande de fréquence selon la revendication 1, **caractérisé en ce que** l'extracteur d'écart de fréquence spécifique (6a) calcule l'écart de fréquence spécifique en multipliant un écart de fréquence par un gain.

5. Appareil de commande de fréquence selon l'une quelconque des revendications 1 à 4, **caractérisé en ce que** l'unité de commutation de commande (9a) commute, sur la base de l'écart de fréquence détecté par le détecteur d'écart de fréquence (5a), depuis une commande de fréquence qui échange la puissance électrique entre les deux systèmes électriques (2α, 2β), ladite unité étant adaptée pour réduire au minimum l'écart de fréquence spécifique extrait par l'extracteur d'écart de fréquence spécifique (6a) à une commande de fréquence qui échange la puissance électrique entre les deux systèmes électriques (2α, 2β), ladite unité étant adaptée pour réduire au minimum l'écart de fréquence détecté par le détecteur d'écart de fréquence (5a).

6. Appareil de commande de fréquence utilisé pour une pluralité de systèmes d'interconnexion CC (1a, 1b, 1c) qui interconnectent deux systèmes électriques (2α, 2β) et commandent des fréquences, **caractérisé en ce qu'**il comprend :
un détecteur d'écart de fréquence (5a) qui détecte un écart de fréquence des deux systèmes électriques (2α, 2β) ;
une unité d'attribution de puissance électrique d'échange (14a) qui calcule une valeur de puissance électrique d'échange pour un échange de puissance électrique entre les deux systèmes électriques (2α, 2β), ladite unité étant adaptée pour réduire au minimum l'écart de fréquence détecté par le détecteur d'écart de fréquence (5a), et qui divise la valeur de puissance électrique d'échange en des valeurs devant être traitées par les systèmes d'interconnexion CC (1a, 1b, 1c) et attribue les valeurs aux systèmes d'interconnexion CC (1a, 1b, 1c) ;
une unité de commutation de commande (9a) pour une commutation depuis une commande de fréquence, qui échange la puissance électrique en utilisant une valeur de puissance électrique d'échange reçue depuis un autre système d'interconnexion CC en tant que valeur devant être traitée par un système d'interconnexion CC correspondant, à une commande de fréquence qui échange la puissance électrique en utilisant une valeur de puissance électrique d'échange attribuée par l'unité d'attribution de puissance électrique d'échange (14a) en tant que valeur devant être traitée par le système d'interconnexion CC correspondant.

7. Appareil de commande de fréquence selon la revendication 6, **caractérisé en ce que** l'unité d'attribution de puissance électrique d'échange (14a) attribue cette partie de la puissance électrique d'échange qui est en excès par rapport à une valeur prédéterminée en tant que valeur de puissance électrique d'échange devant être traitée par ledit autre système d'interconnexion CC, et attribue la partie de la puissance électrique d'échange qui est jusqu'à la valeur prédéterminée en tant que valeur de puissance électrique d'échange devant être traitée par le système d'interconnexion CC correspondant.

8. Appareil de commande de fréquence selon la revendication 6, **caractérisé en ce que** l'unité d'attribution de puissance électrique d'échange (14a) calcule des valeurs de puissance électrique d'échange devant être traitées par les systèmes d'interconnexion CC (1a, 1b, 1c) sur la base de proportions prédéterminées.

9. Système d'interconnexion CC qui interconnecte deux systèmes électriques (2α, 2β) connectés par un circuit CC et commande des fréquences, **caractérisé en ce qu'**il comprend :
un détecteur d'écart de fréquence (5a) qui détecte des écarts de fréquence des deux systèmes électriques (2α, 2β) ;
un extracteur d'écart de fréquence spécifique (6a) qui extrait un écart de fréquence spécifique satisfaisant une condition prédéterminée des écarts de fréquence (6a) détectés par le détecteur d'écart de fréquence (5a) ; et
une unité de commutation de commande (9a) pour une commutation depuis une commande de fréquence, qui échange la puissance électrique entre les deux systèmes électriques (2α, 2β), ladite unité étant adaptée pour réduire au minimum l'écart de fréquence spécifique extrait par l'extracteur d'écart de fréquence spécifique (6a), à une commande de fréquence qui échange la puissance électrique entre les deux systèmes électriques (2α, 2β), ladite unité étant adaptée pour réduire au minimum l'écart de fréquence détecté par le détecteur d'écart de fréquence (5a).
